# EUROPEAN PATENT SPECIFICATION

(11) **EP 0 810 123 B1**
(45) Date of publication and mention of the grant of the patent: **11.09.2002**
(21) Application number: 97650021.5
(22) Date of filing: 30.05.1997
(51) Int. Cl.: B60R 19/38, B66F 9/075

(54) **A vehicle crash bar assembly**
Rammschutzeinheit für Kraftfahrzeug
Protection anti-choc pour véhicule

(30) Priority: 31.05.1996 IE 960389; 31.05.1996 IE 960392
(43) Date of publication of application: 03.12.1997
(73) Proprietor: Moffett Research and Development Limited, Clontibret, County Monaghan (IE)
(72) Inventor: Moffett, Robert, County Monaghan (IE); Moffett, Carol, County Monaghan (IE); McAdam, James, County Monaghan (IE); Quinn, Paul, County Monaghan (IE); McHugh, Gerard, County Monaghan (IE); Harte, Gerard, County Monaghan (IE); Wylie, Andrew, County Monaghan (IE); McVicar, Martin, Country Monaghan (IE); Cadden, Thomas, Monaghan (IE)
(74) Representative: Schütte, Gearoid

(56) References cited:
- DE-A- 4 320 975
- DE-B- 1 002 641
- DE-U- 8 711 818
- DE-U- 9 306 167
- DE-U- 9 309 228
- FR-A- 2 098 986

## Description

### Introduction

The present invention relates to a crash bar assembly for a vehicle chassis adapted for an auxiliary equipment carrying mode with the auxiliary equipment projecting rearwardly therefrom and in particular to a crash bar for the auxiliary equipment.

One of the principal problems in relation to such auxiliary equipment, for example, forklift trucks which are regularly carried on the rear of vehicle chassis is that crashes do occur when they are on the chassis and they can cause considerable damage by being shifted relative to the truck chassis. There is thus a need to overcome this problem.

There are various regulations in force in relation to such crash bars, often referred to as rear underrun bumpers or rear underrun protection devices, these bumpers must be fitted as near as possible to the rear of the vehicle and the lower edge must not be more than 550 mm from the ground. Further, the bumper must extend to within at least 100 mm from the outermost width of the axles and must not, in any case, extend beyond the width of the rear axle when measured across the outermost face of the tyres. When auxiliary equipment is carried in piggy-back fashion, such as, for example, a piggy-back forklift, the forklift or other auxiliary equipment extends beyond the crash bar or underrun bumper so no matter how efficient and correctly fitted such a bumper is, it is of relatively little use when the vehicle is in the auxiliary equipment carrying mode.

It is known to have on the vehicle itself a vehicle impact absorbing bar mountable in a general transverse orientation with respect to the chassis and adjacent or proud of the rearmost end thereof which can be moved outwardly from this position to an auxiliary equipment carrying mode with the vehicle impact absorbing bar located adjacent the rearmost end of the auxiliary equipment.

Such a vehicle impact absorbing bar for a vehicle which transports loads which protrude beyond the rear of the vehicle and which corresponds to the preamble of claim 1 has been described in DE 1002641B (Hoesch Werke AG).

### Statements of Invention

According to the invention there is provided a crash bar assembly for auxiliary equipment comprising a vehicle crash bar assembly the auxiliary equipement can be carried on a vehicle chassis with the auxiliary equipment projecting rearwardly therefrom, the vehicle chassis having said vehicle crash bar assembly comprising a vehicle impact absorbing bar mountable in a general transverse orientation with respect to the chassis and adjacent or proud of the rearmost end thereof and extending close to, but not beyond the widest part of the rear thereof, characterised in that furthermore the crash bar assembly comprises an equipment impact bar for the auxiliary equipment which is mounted on the auxiliary equipment said equipment impact bar being movable from a storage position allowing the auxiliary equipment operate in a normal manner to an impact absorbing position in the auxiliary equipment carrying mode. Once there is an equipment impact absorbing bar located in this fashion, then the major problem in relation to carrying such auxiliary equipment is overcome.

Further the invention provides a crash bar assembly in which the equipment impact bar is pivotally mounted on the auxiliary equipment to lie beneath the auxiliary equipment, when the auxiliary equipment is operating. This is a particular suitable construction and is relatively inexpensive.

Further the equipment impact bar is pivoted by a fluid operated ram pressurised to provide a desired impact absorption. Again this prevents any need for the operator to expend energy in putting the equipment impact bar in position. It also allows optimum impact absorption.

In one embodiment of the invention the equipment impact bar is mounted on the rear of the auxiliary equipment and movable down on the auxiliary equipment into an operative position in the auxiliary equipment carrying mode. Again this is a relatively simple and useful construction.

In one embodiment of the invention the vehicle impact bar incorporates an auxiliary equipment mounting kit. This means that the vehicle impact bar provides a dual function.

The vehicle impact bar may have a central rigid portion and a pair of foldable extension arms movable out of the way of the auxiliary equipment when mounting the auxiliary equipment. This is particularly advantageous as it allows the neat and easy mounting of a forklift truck or other auxiliary equipment on the rear of a vehicle.

The advantage of the crash bar on the auxiliary equipment is that even if a truck or vehicle chassis does not have a crash bar assembly, as it may not necessarily need it in normal operation, once the auxiliary equipment is mounted thereon, the crash bar assembly is provided.

Very often when auxiliary equipment is mounted on the rear of a vehicle body, it is some considerable distance off the ground and therefore any crash bar which was rigidly mounted thereon would be of relatively little use and would not comply with legislation. However, by having the equipment impact bar movable, it is possible to put the impact bar at the correct height relative to the ground over which the auxiliary equipment is being carried.

### Detailed Description of the Invention

The invention will be more clearly understood from the following description of an embodiment thereof given by way of example only with reference to the accompanying drawings in which:-
Fig. 1 is an end diagrammatic view of a prior art vehicle crash bar
Fig. 2 is a side view of the crash bar of Fig. 1;
Fig. 3 is a plan view of the crash bar of Fig. 1;
Fig. 4 is another plan view showing the crash bar in an extended position of Fig. 1;
Fig. 5 is a side view of the crash bar of Fig.1 and showing a forklift truck on the vehicle chassis;
Fig. 6 is a end view of an alternative construction of crash bar on a trailer chassis not belonging to the invention as defined in the claims;
Fig. 7 is a side view of the crash bar of Fig. 6, not belonging to the invention as defined in the claims;
Fig. 8 is a detailed partially cut away view of portion of a crash bar and mounting kit mounted on a vehicle chassis, as shown in Fig. 5 ;
Fig. 9 is a side view of an alternative construction of crash bar according to the invention in a folded position; not belonging to the invention as defined in the claims;
Fig. 10 is a view similar to Fig. 9 showing the crash bar of Fig. 9 in the extended position;
Fig. 11 is a side view of an alternative construction of crash bar mounted on a forklift truck according to the invention.
Fig. 12 is a side view similar to Fig. 11 of an embodiment of the invention; and
Fig. 13 is a still further side view of a forklift mounted on a trailer chassis which forklift incorporates a crash bar according to the invention.

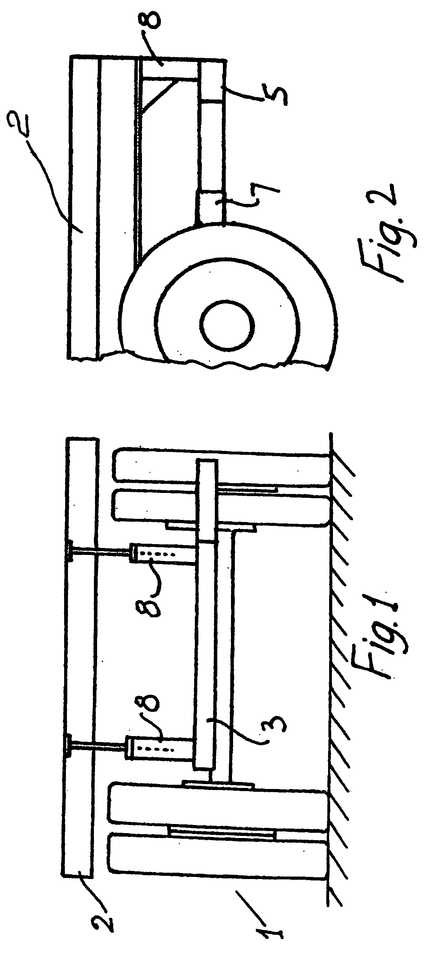

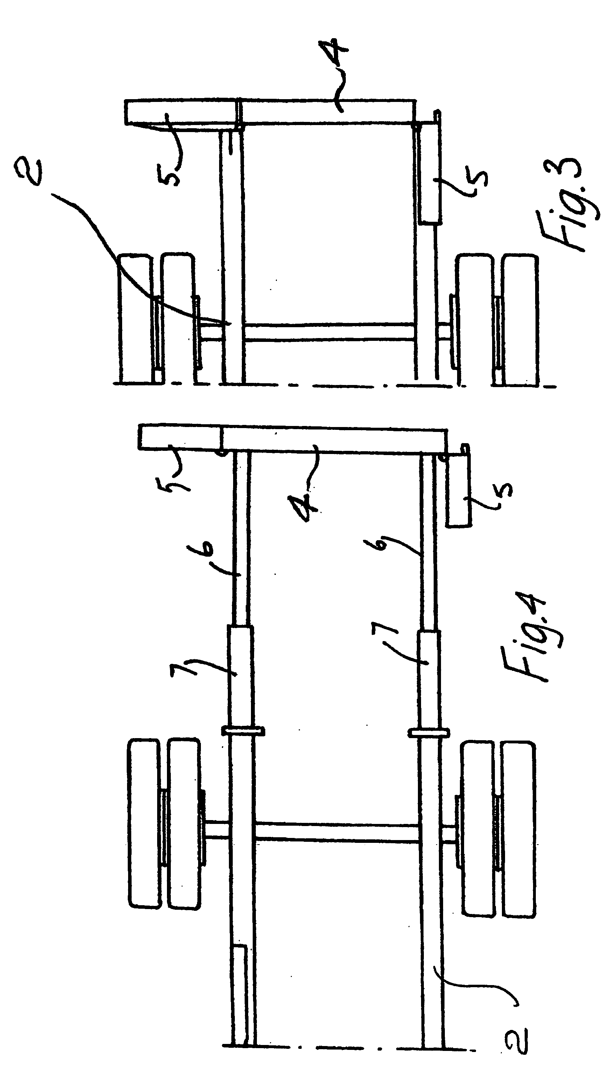

Referring to the drawings and initially to Figs. 1 to 5 thereof, there is illustrated a vehicle crash bar assembly indicated generally by the reference numeral 1 mounted on a chassis 2. The chassis 2 is adapted for mounting auxiliary equipment, in this case a piggy-back forklift truck on the back of it. The mounting kit is not illustrated in these drawings. The crash bar assembly 1 comprises a solid impact absorbing bar 3 which has a central permanently rigid portion 4 and a pair of foldable extension arms 5, which can be retained in the extended position by locking pins not shown. One of these extension arms 5 is shown folded in the drawings and one of the extension arms 5 is shown extended. The rigid portion 4 is mounted on bars 6 slidable within sockets 7. The bar 6 and socket 7 are square sectioned tubing. The socket 7 is suspended by supports 8 from the chassis 2.

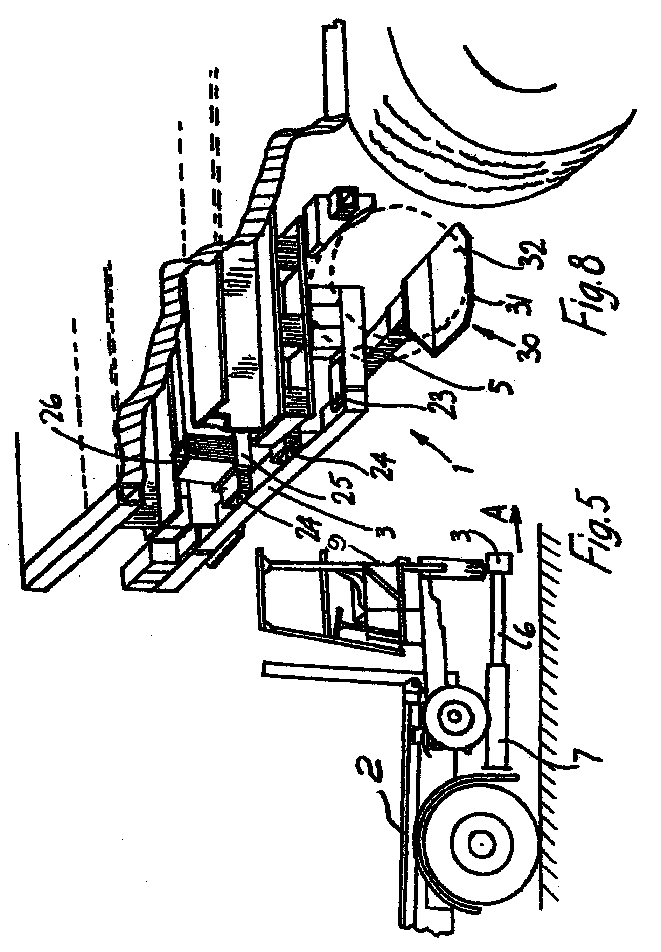

In use, as can be seen from Fig. 5, when a piggy-back forklift identified by the reference numeral 9 is mounted on the truck in conventional manner, the impact absorbing bar 3 may be moved outwards in the direction of the arrow A to form a rigid crash bar which is retained in position by locking pins, not shown, engaging the bar 6 within the socket 7.

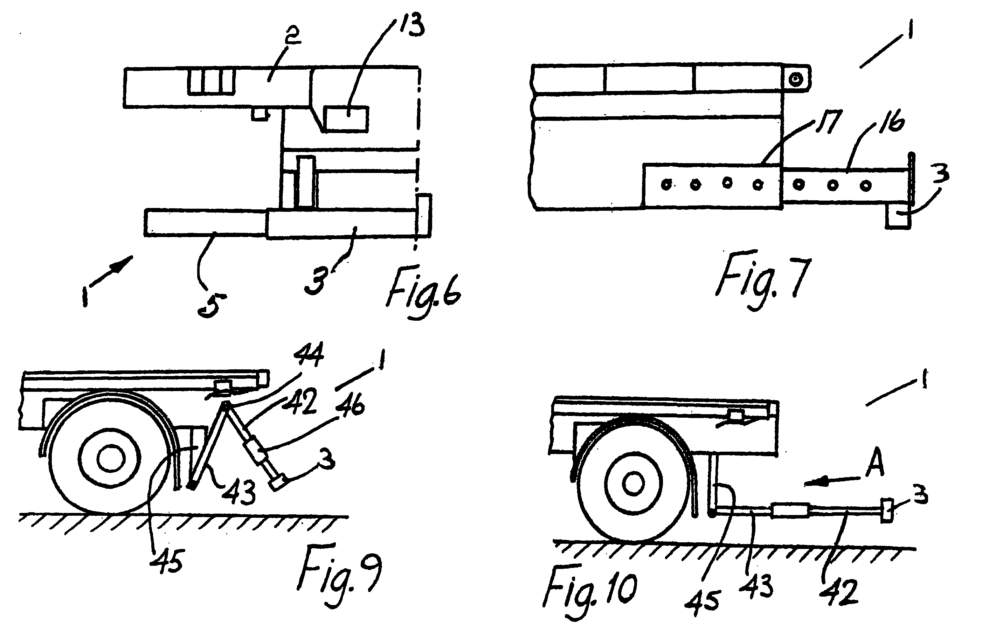

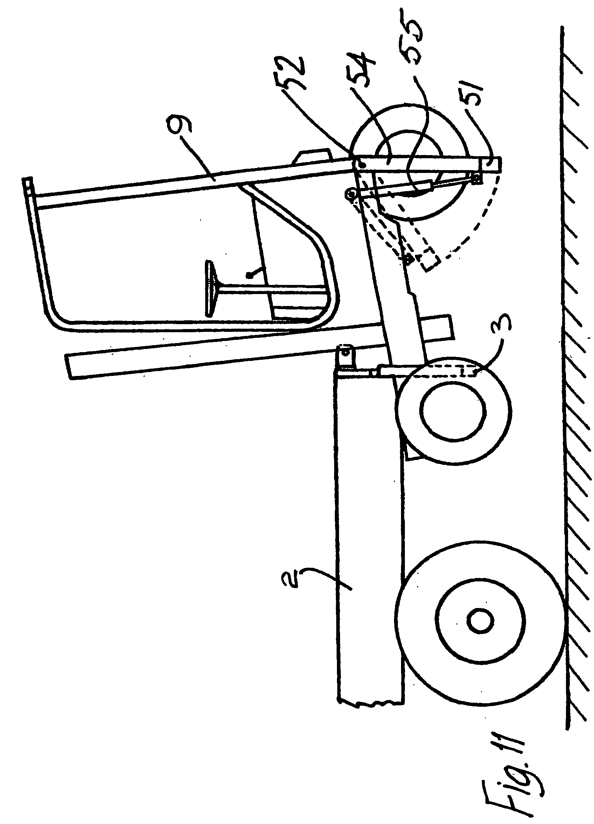

Referring to Figs. 6 and 7 there is illustrated an alternative construction of crash bar assembly again indicated generally by the reference numeral 1 mounted on the chassis 2. Parts similar to those described with reference to the previous drawings are throughout this specification identified by the same reference numerals even where they are not identical, but where such identification would assist in the understanding of the invention. The chassis 2 carries sockets 13 for reception of the forks of a forklift truck for mounting a forklift truck in piggy-back fashion on the chassis 2. The crash bar assembly 1 comprises an impact absorbing bar 3, having telescopic extensions 5. The impact absorbing bar 3 is in turn mounted by a square sectioned bar 16 within a further square sectioned bar 17 forming a socket. Radial holes are provided in both the socket 17 and the bar 16 for reception of locking pins to allow the crash bar be placed in a number of positions.

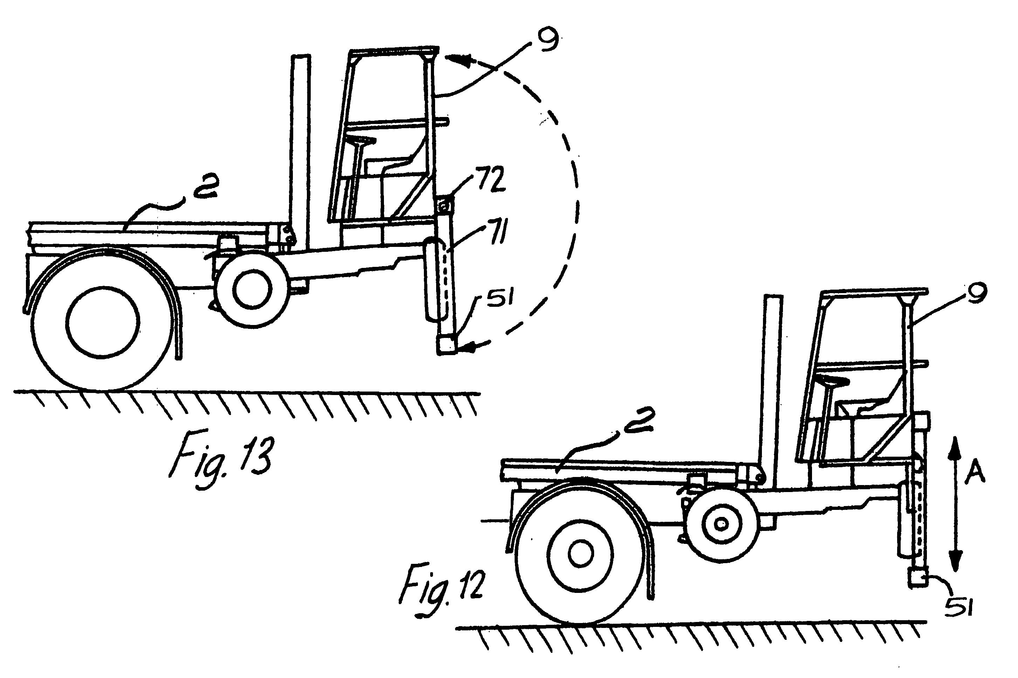

Referring to Fig. 8 there is illustrated in somewhat more detail a crash bar assembly again indicated generally by the reference numeral 1 having an impact absorbing bar 3 including foldable side extension arms 5 connected thereto by pivot pins 23. It will be noted from the drawing that one is shown in a folded stored position and the other is shown on the left hand side of the drawing in an extended position. A spring-loaded locking pin, not shown, is mounted on each extension arm 5 which is engagable with associated locking holes in the impact absorbing bar 3. The impact absorbing bar 3 is mounted by a pair of mild steel channel sections 24 in sockets 25 suspended from the chassis 2 by hanger arms 26. A mounting kit indicated generally by the reference numeral 30 having wheel rest plates 31. A wheel is shown resting on the plates by broken outline and is identified by the reference numeral 32. When it is desired to mount a forklift truck on the vehicle chassis the extension arms 5 are folded inwards as illustrated on the right hand side of the drawing and the forklift mounted with its wheels 32 resting on the wheel plates 31. Then the impact absorbing bar 3 is drawn forwards beneath the piggy-back forklift as shown in Fig. 5 and the extension arms 5 are folded outwards and locked in position to provide a fully rigid crash bar assembly.

Referring to Figs. 9 and 10 there is illustrated in diagrammatic form another construction of crash bar assembly indicated generally by the reference numeral 1. This crash bar assembly has one impact absorbing bar 3 mounted by means of a pair of link arms 42 and 43 interconnected by a hinge 44 on a hanger arm 45. A sleeve 46 is slidably mounted on the link arm 42.

In operation when the crash bar assembly is in the position illustrated in Fig. 9 the crash bar assembly acts as a normal crash bar assembly for the truck. However, when a piggy-back forklift is mounted on the truck, the crash bar assembly can be unfolded and it takes up the orientation illustrated in Fig. 10 when the sleeve 46 is moved in the direction of the arrow A (see Fig. 10) to secure the link arms rigidly together.

Referring to Fig. 11, there is illustrated a vehicle impact absorbing bar 50 mounted on a vehicle chassis 2 and an equipment impact bar 51 mounted on the piggy-back forklift 9. The piggy-back forklift 9 is illustrated mounted on a vehicle chassis 2. The equipment impact bar 51 is mounted by a link arm 54 on the forklift truck 52 and is pivoted by a pneumatic ram 55. It can be seen how operation of the pneumatic ram 55 pivots the equipment impact bar 51 in and out of position to lie either totally beneath the auxiliary equipment so as to allow the equipment to operate in a normal manner or to form crash bar when being mounted on the rear of a vehicle.

Referring now to Fig. 12 there is illustrated a further alternative construction of equipment impact bar, againindicated by the reference numeral 51, mounted on the piggy-back truck 9. In this embodiment, the equipment impact bar 51 is mounted on the rear of the piggy-back truck 9 and is movable up and down in the direction of the arrow A, see Fig. 12. This allows it to act as a crash bar assembly or to be moved out of the way when the piggy-back truck is working.

Fig. 13 illustrates a still further construction of equipment impact bar 51 mounted by means of an arm 71 and pivot pin 72 on the rear of the piggy-back forklift 9. The equipment impact bar 51 is pivotal up and down in the direction of the arrow A as illustrated in Fig. 13.

It should be noted, however, that while the embodiments described above shows a vehicle impact bar mounted on the vehicle chassis in certain instances there may not be an impact bar mounted on the vehicle chassis and thus the equipment impact bar may comprise the whole crash bar assembly.

Various mechanical aids such as ropes and associated pulleys, hydraulic or pneumatic rams may be used in combination with a vehicle impact bar or as the whole assembly. A pulley mounted adjacent the top of the rear of the auxiliary and an associated flexible connector would be particularly useful and may be operated manually or through a power take-off from the auxiliary equipment.

The invention is not limited to the embodiments hereinbefore described which may be varied in both construction and detail within the scope of the claims.

## Claims

1. A crash bar assembly for auxiliary equipment (9) comprising a vehicle crash bar assembly, the auxiliary equipment (9) can be carried on a vehicle chassis (2) with the auxiliary equipment 9 projecting rearwardly therefrom, the vehicle chassis (2) having said vehicle crash bar assembly comprising a vehicle impact absorbing bar (3) mountable in a general transverse orientation with respect to the chassis (2) and adjacent or proud of the rearmost end thereof and extending close to, but not beyond the widest part of the rear thereof, **characterised in that** furthermore the crash bar assembly comprises an equipment impact bar (51) for the auxiliary equipment (9) which is mounted on the auxiliary equipment (9) said equipment impact bar (51) being movable from a storage position allowing the auxiliary equipment (9) operate in a normal manner to an impact absorbing position in the auxiliary equipment carrying mode.

2. A crash bar assembly as claimed in claim 1, in which the equipment impact bar (51) is pivotally mounted on the auxiliary equipment (9) to lie beneath the auxiliary equipment (9), when the auxiliary equipment (9) is operating.

3. A crash bar assembly as claimed in claim 2, in which the equipment impact bar (51) is pivoted by a fluid operated ram (55) pressurised to provide a desired impact absorption.

4. A crash bar assembly as claimed in claim 2, in which the equipment impact bar (51) is pivotally mounted on the rear of the auxiliary equipment (9).

5. A crash bar assembly as claimed in claim 1 in which the equipment impact bar (51) is mounted on the rear of the auxiliary equipment (9) and movable down on the auxiliary equipment (9) into an operative position in the auxiliary equipment carrying mode.

6. A crash bar assembly as claimed in any preceding claim in which the vehicle impact absorbing bar (3) has a central rigid position (4) and a pair of foldable extension arms (5) movable out of the way of the auxiliary equipment when mounting the auxiliary equipment.

7. A crash bar assembly as claimed in claim 6 in which the vehicle crash bar assembly (1) incorporates an auxiliary equipment mounting kit (30).

## Patentansprüche

1. Stoßstangenbaugruppe für eine Zusatzeinrichtung (9), die eine Fahrzeugstoßstangenbaugruppe aufweist, wobei die Zusatzeinrichtung (9) auf einem Fahrzeugchassis (2) getragen werden kann und die Zusatzeinrichtung (9) nach hinten von demselben vorsteht, wobei das Fahrzeugchassis (2) die genannte Fahrzeugstoßstangenbaugruppe aufweist, die eine Fahrzeugaufpralldämpfungsstange (3) umfasst, welche in einer allgemein queren Ausrichtung in bezug zu dem Chassis (2) und angrenzend an oder erhaben von dem hintersten Ende desselben angebracht werden kann, und sich nahe zu, jedoch nicht über den breitesten Teil der Rückseite desselben hinaus erstreckt, **dadurch gekennzeichnet, dass** die Stoßstangenbaugruppe weiter eine Einrichtungsaufprallstange (51) für die Zusatzeinrichtung (9) aufweist, die an der Zusatzeinrichtung (9) angebracht ist, wobei die genannte Einrichtungsaufprallstange (51) aus einer Lagerposition, die Arbeit der Zusatzeinrichtung (9) in einer normalen Weise zulässt, zu einer Aufpralldämpfungsposition in der Zusatzeinrichtungs-Tragebetriebsart bewegt werden kann.

2. Stoßstangenbaugruppe nach Anspruch 1, bei der die Einrichtungsaufprallstange (51) schwenkbar an der Zusatzeinrichtung (9) angebracht ist, um unter der Zusatzeinrichtung (9) zu liegen, wenn die Zusatzeinrichtung (9) arbeitet.

3. Stoßstangenbaugruppe nach Anspruch 2, bei der die Einrichtungsaufprallstange (51) durch einen fluidbetätigten Druckkolben (55) geschwenkt wird, der zum Schaffen einer gewünschten Aufpralldämpfung unter Druck steht.

4. Stoßstangenbaugruppe nach Anspruch 2, bei der die Einrichtungsaufprallstange (51) schwenkbar an der Rückseite der Zusatzeinrichtung (9) angebracht ist.

5. Stoßstangenbaugruppe nach Anspruch 1, bei der die Einrichtungsaufprallstange (51) an der Rückseite der Zusatzeinrichtung (9) angebracht ist und auf der Zusatzeinrichtung (9) nach unten in eine Betriebsposition in der Zusatzeinrichtungs-Tragebetriebsart bewegt werden kann.

6. Stoßstangenbaugruppe nach einem vorhergehenden Anspruch, bei der die Fahrzeugaufpralldämpfungsstange (3) einen zentralen starren Teil (4) und ein Paar faltbarer Verlängerungsarme (5) aufweist, die bei Anbringung der Zusatzeinrichtung aus dem Weg der Zusatzeinrichtung bewegt werden können.

7. Stoßstangenbaugruppe nach Anspruch 6, bei der die Fahrzeugstoßstangenbaugruppe (1) einen Zusatzeinrichtungsanbringungsbausatz (30) enthält.

## Revendications

1. Ensemble de barre de protection pour équipement auxiliaire (9) comprenant un ensemble de barre de protection de véhicule, l'équipement auxiliaire (9) peut être transporté sur un châssis de véhicule (2) alors que l'équipement auxiliaire (9) se projette vers l'arrière à partir de celui-ci, le châssis de véhicule (2) muni dudit ensemble de barre de protection de véhicule comprenant une barre d'absorption de chocs (3) de véhicule qui peut être montée selon une orientation transversale générale par rapport au châssis (2), et placée de façon adjacente à l'extrémité arrière de celui-ci ou dépassant de cette extrémité, et s'étendant à proximité, mais pas au-delà, de la partie la plus large de la face arrière de celui-ci, **caractérisé en ce qu'**en outre l'ensemble de barre de protection comprend une barre de chocs (51) d'équipement destinée à l'équipement auxiliaire (9) laquelle est montée sur l'équipement auxiliaire (9), alors que ladite barre de chocs (51) d'équipement peut être déplacée entre une position de rangement qui permet à l'équipement auxiliaire (9) de fonctionner de manière normale et une position d'absorption de chocs en mode Transport d'un équipement auxiliaire.

2. Ensemble de barre de protection, selon la revendication 1, dans lequel la barre de chocs (51) de l'équipement est montée de manière pivotante sur l'équipement auxiliaire (9) afin de se trouver sous l'équipement auxiliaire (9) lorsque l'équipement auxiliaire (9) est en cours d'utilisation.

3. Ensemble de barre de protection, selon la revendication 2, dans lequel la barre de chocs (51) de l'équipement est pivotée à l'aide d'un vérin (55) actionné par un fluide pressurisé afin d'assurer l'absorption de chocs requise.

4. Ensemble de barre de protection, selon la revendication 2, dans lequel la barre de chocs (51) de l'équipement est montée de manière pivotante sur la face arrière de l'équipement auxiliaire (9).

5. Ensemble de barre de protection, selon la revendication 1, dans lequel la barre de chocs (51) de l'équipement est montée sur la face arrière de l'équipement auxiliaire (9) et peut être déplacée vers le bas sur l'équipement auxiliaire (9) en position opérationnelle dans le mode Transport d'un équipement auxiliaire.

6. Ensemble de barre de protection, selon l'une quelconque des revendications précédentes, dans lequel la barre d'absorption de chocs (3) de véhicule possède une section centrale rigide (4) et une paire de bras d'extension repliables (5) qu'il est possible d'éloigner de l'équipement auxiliaire lors du montage de l'équipement auxiliaire.

7. Ensemble de barre de protection, selon la revendication 6, dans lequel l'ensemble de barre de sécurité (1) de véhicule incorpore un kit de montage (30) de l'équipement auxiliaire.
